Europäisches Patentamt

European Patent Office

Office européen des brevets

(19)

(11) Publication number: **0 307 194 B1**

(12) **EUROPEAN PATENT SPECIFICATION**

(45) Date of publication of patent specification: **03.06.92**

(51) Int. Cl.⁵: **B65D 33/36**, B65D 75/58, B65D 75/26

(21) Application number: **88308289.3**

(22) Date of filing: **08.09.88**

(54) **Plastics laminate package.**

(30) Priority: **08.09.87 JP 136872/87**

(43) Date of publication of application:
**15.03.89 Bulletin 89/11**

(45) Publication of the grant of the patent:
**03.06.92 Bulletin 92/23**

(84) Designated Contracting States:
**DE FR GB SE**

(56) References cited:
**JP-A- 6 139 228**
**US-A- 4 543 279**

(73) Proprietor: **KABUSHIKI KAISHA HOSOKAWA YOKO**
**No. 11-5, Niban-cho Chiyoda-Ku**
**Tokyo-to(JP)**

(72) Inventor: **Yamazaki, Shokichi**
**No. 1495-51, Namiyanagi**
**Oaza, Han no-shi Saitama-ken(JP)**
Inventor: **Oshmia, Shigeyuki**
**No. 14-13, Numabukuro 3-chome Nakano-ku**
**Tokyo-to(JP)**
Inventor: **Moteki, Yoshiji**
**No. 121-2, Sakae 5-chome Ina-machi**
**Kitaadachi-gun Saitama-ken(JP)**

(74) Representative: **Perry, Robert Edward et al**
**GILL JENNINGS & EVERY 53-64 Chancery Lane**
**London WC2A 1HN(GB)**

## Description

The present invention relates to packages made from laminated plastics materials.

Composite films have been used for available packages. The composite comprises a polyethylene film laminated on a conventional Cellophane sheet or paper. When it is necessary to open the package, a heat-sealed portion of the package can be torn manually. However, such composite films do not provide sufficient resistance to fracture or fluid-tightness, particularly with respect to moisture.

In order to overcome these disadvantages, plastics laminates have been used. However, they have a relatively high tearing strength. Packages made of plastics laminates are difficult to open manually, and either a cutter or other gig must be used, or some means, such as a V or I-shaped notch, must be provided at the heat-seal. Such notches tend to concentrate tearing forces, and to propagate them along the direction of tear.

Such notches can easily be formed by the laminate manufacture, prior to filling the package with its contents. However, if the film manufacturer simply supplies a rolled laminate to the user, it is difficult for the user to form a notch at the heat-seal during production and packing of the package.

Figure 1 of the accompanying drawings is a plan view of a known sealed package, as disclosed in JP-A-61/39228. The drawing shows a package 1 which is heat-sealed at 2, and comprises a plurality of minute scores 3, without a notch. The scores 3 are formed in a sheet prior to production of the package, i.e. before heat-sealing. Alternatively, after heat-sealing, the scores are formed at the heat-sealed portion 2.

On the one hand, it is difficult to score a web so that the scores are correctly aligned with the heat-sealed portion of the package. On the other hand, it is difficult and time-consuming to score the heat-sealed portion, once formed.

The present invention solves the aforesaid problems emphasising various aspects: a laminate as defined in claim 1, a method for producing that laminate as defined in claim 10, a package or pouch as defined in claim 11 formed from the laminate specified before and finally an open-ended tube of laminate as defined in claim 22.

According to one aspect of the invention, a substantially rectangular sealed package comprises a folded laminate of outer and inner plastics layers, adjacent edges (after folding) of the laminate being sealed together, which is externally surface-roughened at or around a fold.

In a package of the invention, only the outer plastics layer is surface-roughened. In its production, opposite ends of a strip of the laminate are heat-sealed together, to give a tubular member.

The tubular member is folded to a flat, rectangular shape, and one end, corresponding to the bottom or top of the package, is also heat-sealed, to give a pouch. As a result, there is a fold at one or each side edge of the pouch and two heat-seals.

The tube and the pouch constitute further aspects of the present invention. The pouch can be sealed to give a package of the invention, after filling as desired with contents.

The surface-roughening serves as a point for starting the tearing operation of the package. Holes or voids in the roughened portion of the outer layer of the laminate may be impregnated with another material, e.g. the material of the inner layer. The external surface of the pouch may therefore be smooth and of good appearance, without any notch or scratch.

The roughened portion may extend linearly. Preferably, it is in a meandering pattern or a zig-zag line. Alternatively, the roughened portion may comprise discontinuous spot-like dimples. The overall width of the roughened portion at a fold of the package may therefore be much greater than its width at any one point.

Surface-roughening may be provided before heat-sealing, at a position other than a heat-sealed portion. The film may be roughened by pressing it against, and moving it relatively to, a rough surface. Alternatively, a plastics film may be surface-roughened without direct contact, by the application of, for example, laser, corona discharge or plasma discharge.

The treated plastics film is then laminated to a substrate film. The laminate is then cut to a predetermined length, so that the roughened portion is aligned with the intended fold in the package. The cut composite is then folded and heat-sealed, as described above.

Lamination may be conducted by extruding the films. During extrusion, the substrate materials may enter into voids of the plastics film so that the external surface of the latter becomes smooth. The roughened plastics film nevertheless functions as an aid for tearing or breaking the fold of the package.

Figure 1 has been described above. The invention will now be described by way of example only with reference to the other accompanying drawings, in which:

Figure 2 is a cross-sectional view of a composite laminate film for use in the present invention;

Figure 3 is a cross-sectional view of the film of Fig. 2, after it has been subjected to surface roughening;

Figure 4 is a cross-sectional view of an alternative composite laminate film for use in this invention;

Figure 5(a) is a perspective view of a pouch whichis an embodiment of the present invention;

Figure 5(b) is a cross-sectional view taken along the line V-V of Fig. 5(a);

Figure 6(a) is a perspective view of another pouch which is an embodiment of the present invention;

Figure 6(b) is a cross-sectional view taken along the line VI-VI of Fig. 6(a);

Figure 7 is an exploded view of the pouch of Fig. 6(a);

Figure 8(a) is a perspective view of a further pouch which is an embodiment of this invention;

Figure 8(b) is a cross-sectional view taken along the line VIII-VIII of Fig.8(a);

Figures 9 and 10 show configurations of roughened areas on products according to this invention;

Figure 11 is a perspective view of a package according to the present invention; and

Figure 12 is a schematic illustration of a device for roughening a plastics film prior to its lamination on to a substrate, for use in this invention.

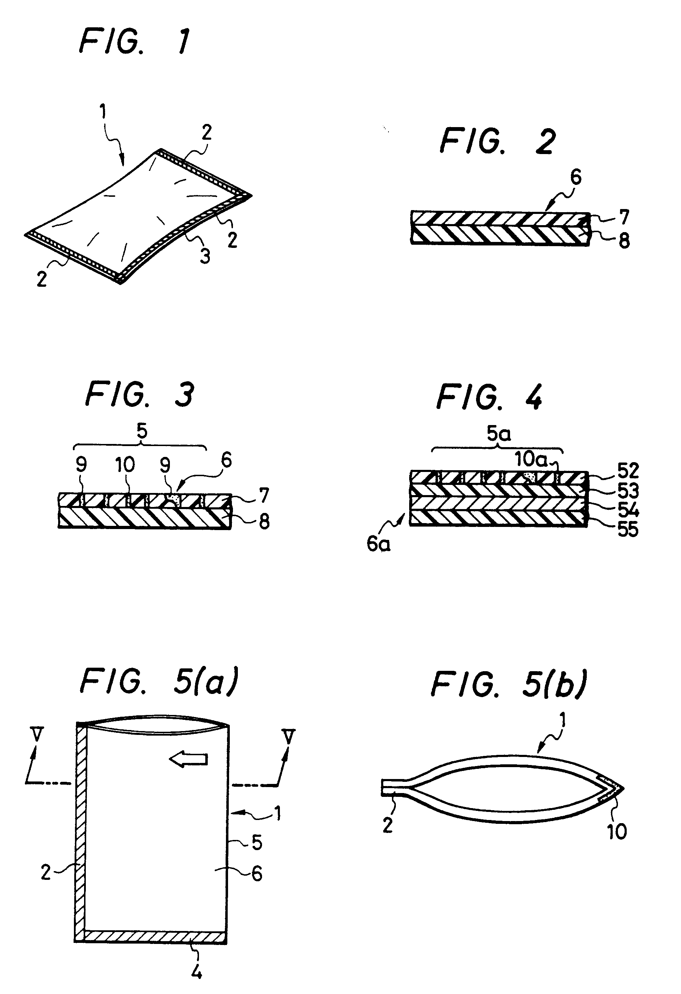

Fig. 2 shows a plastics film 6 which, for the purpose of illustrating suitable materials, comprises a polyethylene film 8, e.g. having a thickness of 40 $\mu$m, laminated to a polypropylene film 7, e.g. having a thickness of 20 $\mu$m. The polypropylene film 7 may have been subjected to biaxial stretching. Mono-axial stretching may be preferred, if linear opening or tearing is desired.

Prior to the extrusion-lamination of the polypropylene film 7 and the polyethylene film 8, the polypropylene film 7 is subjected to surface roughening treatment, to give a roughened surface 10 comprising scores 9, as shown in Fig. 3. The bores, holes or dimples at the scored portions are filled with polyethylene material during the subsequent lamination process. Therefore, the outer surface of the polypropylene film 7 appears flat.

Fig. 4 shows a cross-sectional view of a preferred laminate film 6a for use in the invention. The laminate 6a includes (materials and thicknesses given for illustration) a polyester film 52 having a thickness of 12 $\mu$m, a polyethylene film 53 having a thickness of 15 $\mu$m, an aluminium foil 54 having a thickness of 7 $\mu$m and polyethylene film 55 having a thickness of 30 $\mu$m. A surface of the polyester film 52 is formed with a surface-roughened portion 10a which is produced in the same manner as that shown in Fig. 3.

A pouch 1 formed of the laminate 6 (or 6a) is shown in Figs. 5(a) and 5(b). The pouch 1 has two heat-sealed portions, i.e. a side seal 2 and a bottom seal 4. Of course, the open top portion is also heat-sealed after the pouch is filled. The pouch 1 has a single fold 5, and the surface-roughened portion 10 is at the fold portion 5 only. As shown in Fig. 5(b), the surface-roughened portion 10 is external of the pouch 1. Therefore, contents of the pouch 1 are in contact with the polyethylene film 8.

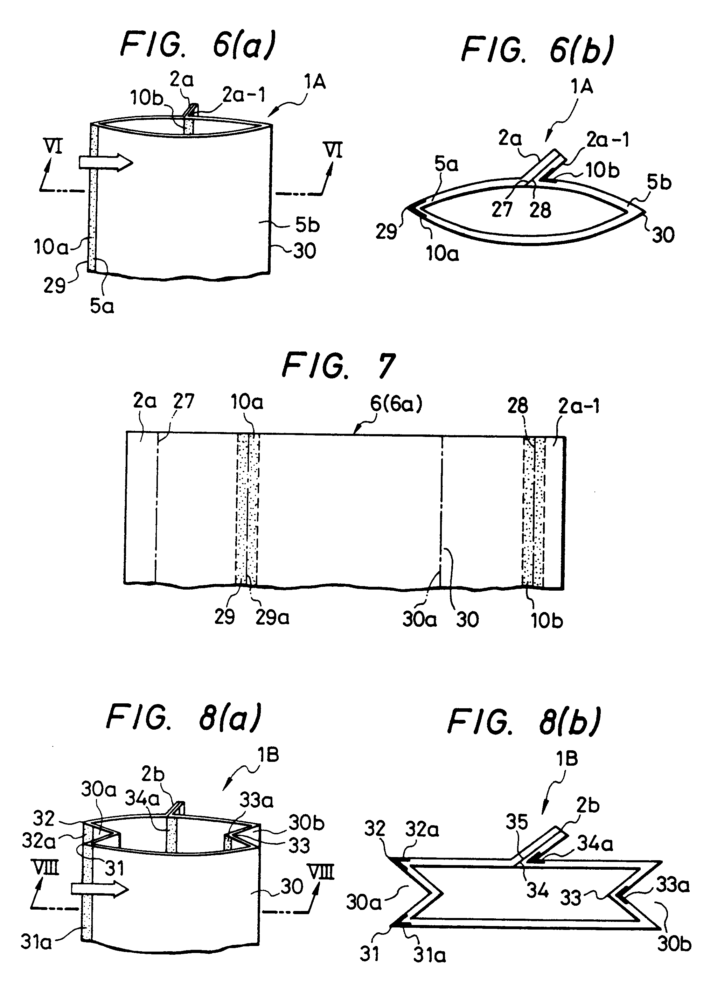

Figs. 6(a), 6(b) and 7 show a pouch (or tube) 1A according to a second embodiment of the present invention. The pouch 1A has two side folds 5a and 5b, and an outwardly-extending central heat-sealed portion 2a. As best shown in Fig. 7, the heat-sealed portion 2a seals the longitudinal ends of the laminate 6. The heat-sealed portion 2a is defined by fold lines 27 and 28, and is roughened in a surface area 10b at and around one of the folding lines 28. Side edges 29 and 30 of the pouch 1A are defined by fold lines 29a and 30a. Further, a roughened surface area 10a is provided at and around one of the fold lines 29a which is spaced at a greater distance from the fold line 28 than the fold line 30a.

As shown in Fig. 6(a), the pouch 1A is opened at the side fold line 29 on which the surface-roughened portion 10a is provided. Further, the other surface roughened portion 10b is provided at the heat-sealed portion 2a-1 which is positioned further from its mutually-meeting heat-sealed portion 2a than from the side edge line 29. The consequence is that linear opening or tearing is smooth, even at the central heat-sealed portion 2a-1. As best shown in Fig. 6(b), the surface-roughened portions 10a and 10b are on the external surface of the pouch 1A. Of course, upper and lower open ends of the pouch 1A are also heat-sealed; the central heat-sealed portion 2a projects outwardly.

Figs. 8(a) and 8(b) show a pouch (or tube) 1B in which each of the side portions is folded in a M-shape, in cross-section. Each side edge of the pouch is thus defined by three parallel folds whose included angles are respectively inward, outward and inward. This type of pouch (1B) is particularly suitable for holding larger amounts of contents for a given size, and the corresponding tube can be self-standing. Assuming that the pouch or consequent package is opened in the direction shown by the arrow in Fig. 8(a), surface-roughened portions 31a and 32a are provided at and around the two "inward" folds 31 and 32 at one side edge of the pouch. Another surface-roughened portion 33a is provided at and around an outward fold 33 of the other side edge 30b. Further, the sealed opposite ends of the strip 2b project outwardly, and a surface-roughened portion 34a is provided at and around one of the fold line 34 of the sealing portion 2b. These surface-roughened portions 31a, 32a, 33a and 34a are external of the pouch 1A. The fold line 34 is positioned further than a fold line 35 from the tear initiation edges 31 and 32.

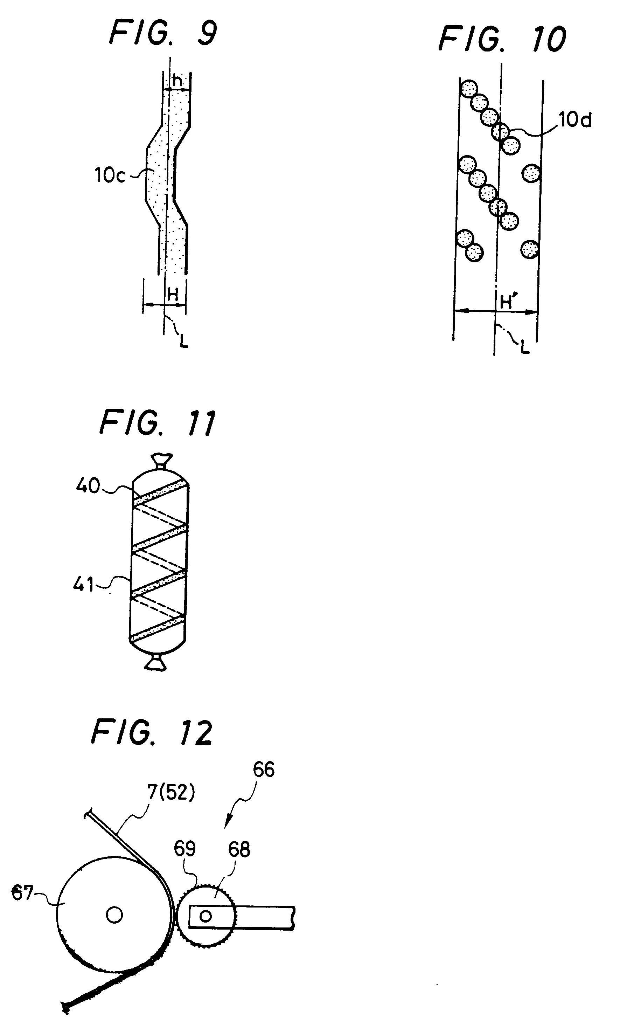

Figs. 9 and 10 shown different configurations of surface-roughened zones. In Fig. 9, a surface-roughened zone 10c is meandering, or lies in a zig-zag line. The surface-roughened zone 10c is provided at, for example, the polyester film 52 shown in Fig. 4. Even though the line has a small width h, the meander width H is large, helping to ensure that the surface-roughened zone can occupy an area at and adjacent the fold line L.

The same is true for the pattern shown in Fig. 10, i.e. parallel rows of circular rough surface portions 10c; each row is at an oblique angle to the fold line L, e.g. 45°. The effective width of the roughened zone is H'. Not only can the roughened zone thus easily be positioned at and adjacent the fold line L, but also the rough area is minimised. As a result, the product has good mechanical strength and gas barrier characteristics, yet provides easy tearing at the fold.

Fig. 11 shows a cylindrical packing bag 41 suitable for packing a sausage. In this case, a surface-roughened portion 40 is in the form of a helix. Therefore, the package 41 can be gradually opened, as desired by the user.

Fig. 12 shows a machine 66 comprising a metal roller 67 and a roller 68 carrying, say, sandpaper or Emery paper 69. The polypropylene film 7 travels between the rollers, in order to provide the scores 9. By way of example, the sandpaper has a particle size degree of No. 100 (defined by japanese Industrial Standard JIS R-6001 which substantially corresponds to ANSI B 74.18 or FEPA 30GB).

The steps by which products of the invention may be made can be summarised as follows:

Print web;
Roughen surface;
Laminate;
Cut/slit;
Heat-seal.

This sequence of steps will now be described with reference to the laminate shown in Fig. 4. The polyester film 52 is printed on one surface, and the other surface is roughened using the apparatus shown in Fig. 12. The polyester film 52, polyethylene film 53, aluminium foil 54 and polyethylene film 55 (respectively 12, 15, 7 and 30 $\mu$m thick) are extrusion-laminated. Surface irregularities formed during roughening of polyester film 52 are filled with polyethylene from the film 53. Of course, instead of using sandpaper, a laser could be used to provide a plurality of perforations or to provide linear recesses. Alternatively, corona discharge, plasma discharge or ultrasonic waves could be used. The surface roughening is carried out so as to provide surface-roughened zones having a predetermined width, depending on the size and shape of the product.

The laminate 6a is then cut or slit. Each of the cut segments is then folded and heat-sealed. There is then a surface-roughened zone at a fold, i.e. at at least one of the side edges of the product. Additional surface-roughening which might be provided, e.g. corresponding to an external protrusion where opposite ends of the folded strip are sealed together. Any such additional surface-roughening is conducted prior to lamination.

**Claims**

1. A laminate (6) comprising:
   a first layer (7) formed of a plastics material and provided with surface irregularities in the form of a plurality of scores or scratches (9);
   a second layer (8) laminated to the first layer; and
   a filling component filled in the scores or scratches.

2. A laminate (6) as claimed in claim 1, wherein the filling component is a resin.

3. A laminate (6) as claimed in claim 1 or claim 2, wherein the second layer (8) is formed of a plastics material.

4. A laminate (6) as claimed in claim 3, wherein the second layer (8) and the filling component are of the same plastics material.

5. A laminate (6) according to any of claims 1 to 4, wherein the first layer (7) comprises a polypropylene or polyester film.

6. A laminate (6) according to any of claims 1 to 5, wherein the second layer (8) comprises a polyethylene film.

7. A laminate (6a) according to any of claims 1 to 6, which additionally comprises a plastics film (54) laminated to an aluminium foil (55), laminated to the second layer (53).

8. A laminate (6) according to any of claims 1 to 7, wherein the first layer (7) is mono-axially stretched and the laminate can be torn linearly in the direction of the mono-axial stretching.

9. A laminate (6) as claimed in any of claims 1 to 8, wherein the plurality of scores or scratches (9) form a guide along which the laminate may be torn.

10. A method for producing a laminate (6) as claimed in any preceding claim, comprising the steps of:
    partially roughening a surface of a first plastics web (7), to provide the surface irregularities (9);

    laminating a second web (8) and the first plastics web (7); and

    filling a resin material into the scores or scratches (9) in the laminating step.

**11.** A package or pouch (1) formed from a laminate (6) as claimed in any of claims 1 to 9.

**12.** A package or pouch (1) according to claim 11, wherein the laminate is folded.

**13.** A package or pouch (1) according to claim 12, wherein the surface irregularities are at or around a fold (5).

**14.** A package or pouch (1) according to claim 13, wherein the surface irregularities comprise parallel rows of essentially circular recesses (10d), the rows being at an angle to the fold.

**15.** A package or pouch (1) according to any of claims 11 to 13, wherein the surface irregularities form a meandering or a zig-zag pattern (10c).

**16.** A package or pouch (1) according to any of claims 11 to 15, wherein the first plastics layer (7) is outwardly orientated with respect to the second layer (8).

**17.** A package or pouch (1) according to any of claims 11 to 16, which is substantially rectangular.

**18.** A package or pouch (1) according to claim 17, comprising a fold (5) and a seal (2) which respectively define two opposite side edges of the package or pouch.

**19.** A package or pouch (1A) according to claim 17, comprising folds (29,30) which define two opposite side edges of the package or pouch, and a seal (2a-1) which projects outwardly with respect to the inside of the package or pouch.

**20.** A package or pouch (1B) according to claim 19, wherein each side edge of the package or pouch is defined by three parallel folds (31,33,32) whose included angles are respectively inward, outward and inward, and wherein the side edges are surface-roughened at or around an inward fold (31a,32a) and an outward fold (33a).

**21.** A package or pouch (1) according to claim 19 or claim 20, which is surface-roughened (34a) at or around a seal (2b).

**22.** An open-ended tube of laminate (1A), from which a package or pouch according to any of claims 11 to 21 can be made.

**Revendications**

**1.** Stratifié (6) comprenant :

    une première couche (7) formée d'une matière plastique et comportant des irrégularités de surface sous la forme d'une pluralité de stries ou rayures (9) ;

    une seconde couche (8) accolée à la première couche ; et

    un composant de remplissage remplissant les stries ou rayures.

**2.** Stratifié (6) selon la revendication 1, dans lequel le composant de remplissage est une résine.

**3.** Stratifié (6) selon la revendication 1 ou 2, dans lequel la seconde couche (8) est formée d'une matière plastique.

**4.** Stratifié (6) selon la revendication 3, dans lequel la seconde couche (8) et le composant de remplissage sont formés de la même matière plastique.

**5.** Stratifié (6) selon l'une quelconque des revendications 1 à 4, dans lequel la première couche (7) comprend un film de polypropylène ou de polyester.

**6.** Stratifié (6) selon l'une quelconque des revendications 1 à 5, dans lequel la seconde couche (8) comprend un film de polyéthylène.

**7.** Stratifié (6a) selon l'une quelconque des revendications 1 à 6, qui comprend, en outre, un film plastique (54) accolé à un papier d'aluminium (55) accolé à la seconde couche (53).

**8.** Stratifié (6) selon l'une quelconque des revendications 1 à 7, dans lequel la première couche (7) est étirée suivant un seul axe et le stratifié peut être déchiré linéairement dans la direction de l'étirage selon un seul axe.

**9.** Stratifié (6) selon l'une quelconque des revendications 1 à 8, dans lequel la pluralité de stries ou rayures (9) forme un guide le long duquel le stratifié peut être déchiré.

**10.** Procédé pour produire un stratifié (6) selon l'une quelconque des revendications précédentes, comprenant les étapes consistant :

    à rendre partiellement rugueuse une surface d'une première nappe ou feuille (7) de matière plastique pour obtenir des irrégularités (9) de surface ;

à accoler une seconde nappe ou feuille (8) à la première nappe ou feuille (7) de matière plastique ; et

à remplir de résine les stries ou rayures (9) au cours de l'étape de stratification.

11. Emballage ou poche (1) formée par un stratifié (6) selon l'une quelconque des revendications 1 à 9.

12. Emballage ou poche (1) selon la revendication 11, dans lequel le stratifié est plié.

13. Emballage ou poche (1) selon la revendication 12, dans lequel les irrégularités de surface se trouvent à l'endroit ou autour d'un pli (5).

14. Emballage ou poche (1) selon la revendication 13, dans lequel les irrégularités de surface comprennent des rangées parallèles de sillons essentiellement circulaires (10d), les rangées faisant un certain angle par rapport au pli.

15. Emballage ou poche (1) selon l'une quelconque des revendications 11 à 13, dans lequel les irrégularités de surface forment un dessin sinueux ou en zigzag (10c).

16. Emballage ou poche (1) selon l'une quelconque des revendications 11 à 15, dans lequel la première couche (7) de matière plastique est orientée vers l'extérieur par rapport à la seconde couche (8).

17. Emballage ou poche (1) selon l'une quelconque des revendications 11 à 16, qui est sensiblement rectangulaire.

18. Emballage ou poche (1) selon la revendication 17, comprenant un pli (5) et un joint étanche (2) qui définissent respectivement deux bords latéraux opposés de l'emballage ou poche.

19. Emballage ou poche (1A) selon la revendication 17, comprenant des plis (29, 30) qui définissent deux bords latéraux opposés de l'emballage ou poche, et un joint d'étanchéité (2a-1) qui fait saillie vers l'extérieur par rapport à l'intérieur de l'emballage ou poche.

20. Emballage ou poche (1B) selon la revendication 19, dans lequel chaque bord latéral de l'emballage ou poche est défini par trois plis parallèles (31, 33, 32) dont les angles inclus se trouvent respectivement vers l'intérieur, vers l'extérieur et vers l'intérieur, et dans lequel la surface des bords latéraux est rendue rugueuse à l'endroit ou autour du pli intérieur (31a, 32a) et du pli extérieur (33a).

21. Emballage ou poche (1) selon la revendication 19 ou la revendication 20, dont la surface (34a) est rendue rugueuse à l'endroit ou autour du joint étanche (2b).

22. Tube de stratifié (1A) à extrémités ouvertes, au moyen duquel on peut réaliser un emballage ou une poche selon l'une quelconque des revendications 11 à 21.

**Patentansprüche**

1. Schichtstoff (6) umfassend:

eine erste Schicht (7), die aus Kunststoffmaterial ausgebildet ist und mit Oberflächenunregelmäßigkeiten in Form mehrerer Kerben oder Kratzer (9) versehen ist;

eine zweite Schicht (8), die auf die erste Schicht laminiert ist; und

eine Füllkomponente, die in die Kerben oder Kratzer gefüllt ist.

2. Schichtstoff (6) nach Anspruch 1, dadurch **gekennzeichnet,** daß die Füllkomponente ein Kunstharz ist.

3. Schichtstoff (6) nach Anspruch 1 oder 2, dadurch **gekennzeichnet,** daß die zweite Schicht (8) aus einem Kunststoffmaterial ausgebildet ist.

4. Schichtstoff (6) nach Anspruch 3, dadurch **gekennzeichnet,** daß die zweite Schicht (8) und die Füllkomponente aus dem gleichen Kunststoffmaterial bestehen.

5. Schichtstoff (6) nach einem der Ansprüche 1-4, dadurch **gekennzeichnet,** daß die erste Schicht (7) einen Polypropylen- oder Polyesterfilm umfaßt.

6. Schichtstoff (6) nach einem der Ansprüche 1-5, dadurch **gekennzeichnet,** daß die zweite Schicht (8) einen Polyethylenfilm umfaßt.

7. Schichtstoff (6a) nach einem der Ansprüche 1-6, dadurch **gekennzeichnet,** daß dieser zusätzlich einen auf die zweite Schicht (53) laminierten Kunststoffilm (54) umfaßt, der auf eine Aluminiumfolie (55) laminiert ist.

8. Schichtstoff (6) nach einem der Ansprüche 1-7, dadurch **gekennzeichnet,** daß die erste Schicht (7) monoaxial gezogen ist, und daß die Schutzschicht linear in Richtung des monoaxialen Ziehens gerissen werden kann.

9. Schichtstoff (6) nach einem der Ansprüche 1-8, dadurch **gekennzeichnet,** daß die Kerben oder Kratzer (9) eine Führung bilden, entlang der der Schichtstoff gerissen werden kann.

10. Verfahren zum Herstellen eines Schichtstoffes (6) nach einem der vorstehenden Ansprüche, umfassend die folgenden Schritte:

    teilweises Aufrauen einer Oberfläche einer ersten Kunststoffbahn (7), um die Oberflächenunregelmäßigkeiten (9) zu schaffen;

    Laminieren einer zweiten Bahn (8) mit der ersten Kunststoffbahn (7); und

    Füllen eines Kunstharzmaterials in die Kerben oder Kratzer (9) während des Laminationsschrittes.

11. Aus einem Schichtstoff (6) nach einem der Ansprüche 1-9 geformte Verpackung oder geformter Beutel (1).

12. Verpackung oder Beutel (1) nach Anspruch 11, dadurch **gekennzeichnet,** daß der Schichtstoff gefaltet ist.

13. Verpackung oder Beutel (1) nach Anspruch 12, dadurch **gekennzeichnet,** daß die Oberflächenunregelmäßgkeiten bei einer Faltung (5) oder um eine Faltung herum angeordnet sind.

14. Verpackung oder Beutel (1) nach Anspruch 13, dadurch **gekennzeichnet,** daß die Oberflächenunregelmäßigkeiten parallele Reihen von im wesentlichen kreisförmigen Aussparungen (10d) umfassen, wobei die Reihen in einem Winkel zu der Faltung angeordnet sind.

15. Verpackung oder Beutel (1) nach einem der Ansprüche 11-13, dadurch **gekennzeichnet,** daß die Oberflächenunregelmäßigkeiten ein mäanderförmiges oder ein zick-zack-förmiges Muster (10c) bilden.

16. Verpackung oder Beutel (1) nach einem der Ansprüche 11-15, dadurch **gekennzeichnet,** daß die erste Kunststoffschicht (7) bezogen auf die zweite Schicht (8) nach außen gerichtet ist.

17. Verpackung oder Beutel (1) nach einem der Ansprüche 11-16, dadurch **gekennzeichnet,** daß diese(r) im wesentlichen rechteckig ist.

18. Verpackung oder Beutel (1) nach Anspruch 17, dadurch **gekennzeichnet,** daß diese(r) eine Faltung (5) und eine Dichtung (2) umfaßt, die jeweils zwei gegenüberliegende Seitenkanten der Verpackung oder des Beutels festlegen.

19. Verpackung oder Beute] (1A) nach Anspruch 17, dadurch **gekennzeichnet,** daß diese(r) Faltungen (29, 30) umfaßt die zwei gegenüberliegende Seitenkanten der Verpackung oder des Beutels festlegen, sowie eine Dichtung (2a-1), die bezogen auf die Innenseite der Verpackung oder des Beutels nach außen vorsteht.

20. Verpackung oder Beutel (1B) nach Anspruch 19, dadurch **gekennzeichnet,** daß jede Seitenkante der Verpackung oder des Beutels durch drei parallele Faltungen (31, 33, 32) festgelegt ist, deren eingeschlossene Winkel jeweils nach innen, nach außen und nach innen gerichtet sind, und wobei an oder um eine innere Faltung (31a, 32a) und eine äußere Faltung (33a) die Seitenkanten oberflächenaufgeraut sind.

21. Verpackung oder Beutel (1) nach Anspruch 19 oder 20, dadurch **gekennzeichnet,** daß diese(r) an einer Dichtung oder um eine Dichtung (2b) herum oberflächenaufgeraut (34a) ist.

22. An den Enden offene Röhre (1A) aus Schichtstoff, aus der eine Verpackung oder ein Beutel nach einem der Ansprüche 11-21 hergestellt werden kann.

EP 0 307 194 B1

FIG. 1

FIG. 2

FIG. 3

FIG. 4

FIG. 5(a)

FIG. 5(b)

8

*FIG. 6(a)*

*FIG. 6(b)*

*FIG. 7*

*FIG. 8(a)*

*FIG. 8(b)*

FIG. 9

FIG. 10

FIG. 11

FIG. 12